# EUROPÄISCHE PATENTSCHRIFT

(11) **EP 1 375 061 B1**
(45) Veröffentlichungstag und Bekanntmachung des Hinweises auf die Patenterteilung: **31.08.2005**
(21) Anmeldenummer: 03014123.8
(22) Anmeldetag: 24.06.2003
(51) Int. Cl.: B23Q 11/00

(54) **Vorrichtung zur Späneentsorgung**
Device for removal of chips
Dispositif pour l'enlèvement de copeaux

(30) Priorität: 28.06.2002 DE 20210067 U
(43) Veröffentlichungstag der Anmeldung: 02.01.2004
(73) Patentinhaber: Herold, Bertram, 76448 Durmersheim (DE)
(72) Erfinder: Herold, Bertram, 76448 Durmersheim (DE)
(74) Vertreter: Blumenröhr, Dietrich

(56) Entgegenhaltungen:
- EP-A- 0 269 124
- EP-A- 1 186 557
- DE-A- 10 041 355
- US-A- 4 635 408
- US-A- 5 932 094

## Beschreibung

Die Erfindung betrifft eine Vorrichtung zum Entfernen von Produktionsrückständen, insbesondere Spänen, aus einer Flüssigkeit wie insbesondere Kühlschmiermittel, mit einem Beruhigungsraum für die Flüssigkeit. (siehe z.B. EP-A-1 186 557)

Beim Drehen, Fräsen oder sonstigem spanenden Bearbeiten eines metallischen Werkstückes wird das Werkzeug häufig mit Öl oder einer Emulsion gekühlt und geschmiert. Dieses Kühlschmiermittel dient auch dazu, die bei der Bearbeitung des Werkstückes entstehenden Späne abzutransportieren. Um diese Flüssigkeit erneut nutzen zu können, müssen die von ihr wegtransportierten Späne aus ihr entfernt werden.

Hierzu stellt der Anmelder bereits seit längerem Vorrichtungen her, bei der das mit Spänen belastete Kühlschmiermittel über einen Kanal auf ein Grobsieb gefördert wird, das von einem Langspanförderer kontinuierlich freigekratzt wird.

Durch das Grobsieb hindurch tritt das Kühlschmiermittel in einen Filterraum ein, aus dem es durch die als Filter ausgebildete Wand in einen Beruhigungsraum eintritt. Die Filterwand wird dabei durch umlaufende Rakel von sich absetzenden Spänen freigehalten.

Die aus dem Filterraum austretende Flüssigkeit kommt dann im Beruhigungsraum zur Ruhe. Aus dem Beruhigungsraum wird das durch das Grobsieb und die Filterwand des Filterraumes gereinigte Öl abgesaugt oder auf andere Weise abgeleitet.

Es ist in diesem Zusammenhang wesentlich, dass aufgrund der Beruhigung noch im Kühlschmiermittel als Schwebstoffe vorhandene Feinstspäne sich absetzen. Dieses Absetzen der Feinstspäne als Bodensatz führt auf Dauer aber zu einer Verringerung des für die Beruhigung zur Verfügung stehenden Volumens des Beruhigungsraumes. Dies führt zu einem höheren relativen Durchsatz im Beruhigungsraum: Das zur Verfügung stehende Beruhigungsvolumen wird häufiger umgesetzt. Damit wird auch die Verweildauer der Flüssigkeit im Beruhigungsraum kürzer und die eigentlich erwünschte Absetzung von Schwebstoffen findet nicht mehr in ausreichendem Maße statt. Das Entfernen von Produktionsrückständen wie Feinstspänen nimmt somit über die Dauer ab.

Aufgabe der vorliegenden Erfindung ist es somit, eine Vorrichtung wie oben angegeben derart weiterzuentwickeln, dass sich das effektiv zur Verfügung stehende Volumen eines Beruhigungsraumes nicht verringert.

Diese Aufgabe wird erfindungsgemäß dadurch gelöst, dass über den Boden des Beruhigungsraumes wenigstens ein Abstreifer läuft, und dass der Boden wenigstens eine vom Abstreifer überstrichene Öffnung aufweist, durch die vom Abstreifer mitgeführte Produktionsrückstände nach unten abgeführt werden.

Es ist aus der DE-U 295 10 514 zwar bereits bekannt, einen Abstreifer über den Boden eines Sammelbehälters für Kühlschmiermittel laufen zu lassen. Mit diesem werden die Späne zusammengeschabt und dann von einer Pumpe abgesaugt. Dies hat aber den Nachteil, dass die Späne immer nur zusammen mit erheblichen Mengen an Kühlschmiermittel abgesaugt werden, was bei Übertragung auf eine erfindungsgemäße Vorrichtung wegen erhöhten Mengen an nicht in den Kreislauf zurückgeführtem Kühlschmiermittel unerwünscht ist.

Die erfindungsgemäße Vorrichtung hat dementgegen den Vorteil, dass die vom Abstreifer über die Bodenöffnung geschobenen Produktionsrückstände durch diese nach unten aus dem Beruhigungsraum herausgeschoben werden und dort separat zu entsorgen sind. Es wird somit verhindert, dass das sich am Boden absetzende Material wieder aufgewirbelt und erneut im Kühlschmiermittel in Lösung geht.

Es hat sich in diesem Zusammenhang als vorteilhaft erwiesen, unter der Öffnung, durch die das vom Abstreifer mitgeführte Material fällt, einen Horizontalförderer anzuordnen, insbesondere einen Kettenförderer. Mit diesem ist ein besonders turbulenzarmer Abtransport des sich im Beruhigungsraum absetzenden Materiales möglich. Vorzugsweise geht der Horizontalförderer in einen Schrägförderer über, über den das Material dann direkt in einen Auffangbehälter abgeworfen wird, aus dem es dann einer Entsorgung oder einem Recycling zugeführt werden kann.

Um ein besonders turbulenzfreies Eintreten von durch die Abstreifer mitgeführten Produktionsrückständen nach unten zu dem Horizontalförderer durch den Boden des Beruhigungsraumes zu erreichen, wird vorgeschlagen, die in dem Boden vorgesehene Öffnung durch im Wesentlichen schräg angeordnete, vorzugsweise parallelogrammartige Schlitze zu bilden. Hierdurch ist zu erreichen, dass ein Abstreifer das von ihm mitgeschleppte Material sukzessive nach unten abgibt und nicht durch ein schlagartiges Abfallen des mitgeschleppten Materiales eine unerwünschte Verwirbelung auftritt.

Im übrigen kann eine wie hier beschriebene Vorrichtung auch nachrüstbar für bereits existierende Anlagen ausgebildet werden. Hierzu wird dann der Boden des Beruhigungsraumes, über den der Abstreifer läuft, als Einlegeteil ausgebildet. Um dabei weiterhin ein größtmögliches Volumen des Beruhigungsraumes gewährleisten zu können, verläuft ein derartig eingelegter Boden dabei vorzugsweise in einer geneigten Richtung.

Weiter Vorteile und Merkmale der Erfindung ergeben sich aus den nachfolgenden Beschreibung von Ausführungsbeispielen. Dabei zeigt:
- Figur 1: die Seitenansicht einer erfindungsgemäßen Vorrichtung als Prinzipskizze;
- Figur 2: die Aufsicht auf eine Vorrichtung gemäß Figur 1;
- Figur 3: die Seitenansicht einer anderen Ausführungsform einer erfindungsgemäßen Vorrichtung als Prinzipskizze.

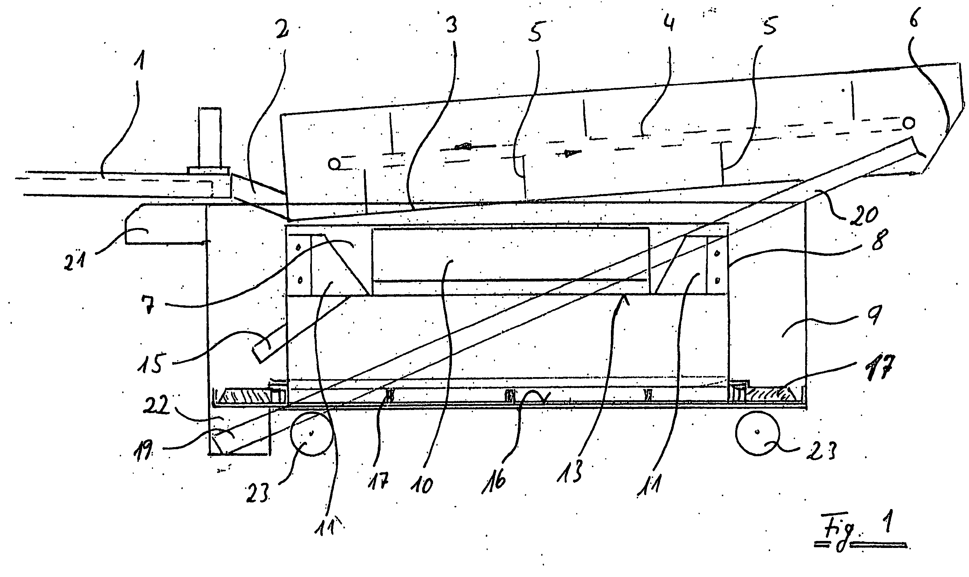

In der Figur 1 erkennt man die Seitenansicht einer Vorrichtung zum Entfernen von Produktionsrückständen gemäß der Erfindung in der Seitenansicht.

Von einer nicht dargestellten Werkzeugmaschine wird in dieser verwandtes Kühlschmiermittel über einen Kanal 1 zugeführt. Dieses Kühlschmiermittel spült dabei auch Metallspäne etc. aus der Werkzeugmaschine, die vor einer Wiederverwendung des Kühlschmiermittels aus diesem entfernt werden müssen.

Dafür wird das Kühlschmiermittel aus dem Kanal 1 kommend über ein Mündungsstück 2 auf ein hier nur in der Seitenansicht dargestelltes Grobsieb 3 gegeben, das einen Sieblochdurchmesser von etwa 2 bis 3 mm aufweist. Sich auf diesem Grobsieb absetzende Grob- oder Langspäne werden von einem Langspanförderer 4 mit mehreren über das Grobsieb geführten Kratzern 5 zu einer Auswurföffnung 6 gekratzt, wo diese Späne in einen hier nicht dargestellten Sammelbehälter fallen.

Das durch das Grobsieb 3 hindurchtretende Kühlschmiermittel läuft in einen Filterraum 7, dessen Wände durch eine vertikale Filterwand 8 gebildet werden. Durch diese Filterwand 8 hindurch tritt das Kühlschmiermittel dann in den Beruhigungsraum 9 ein.

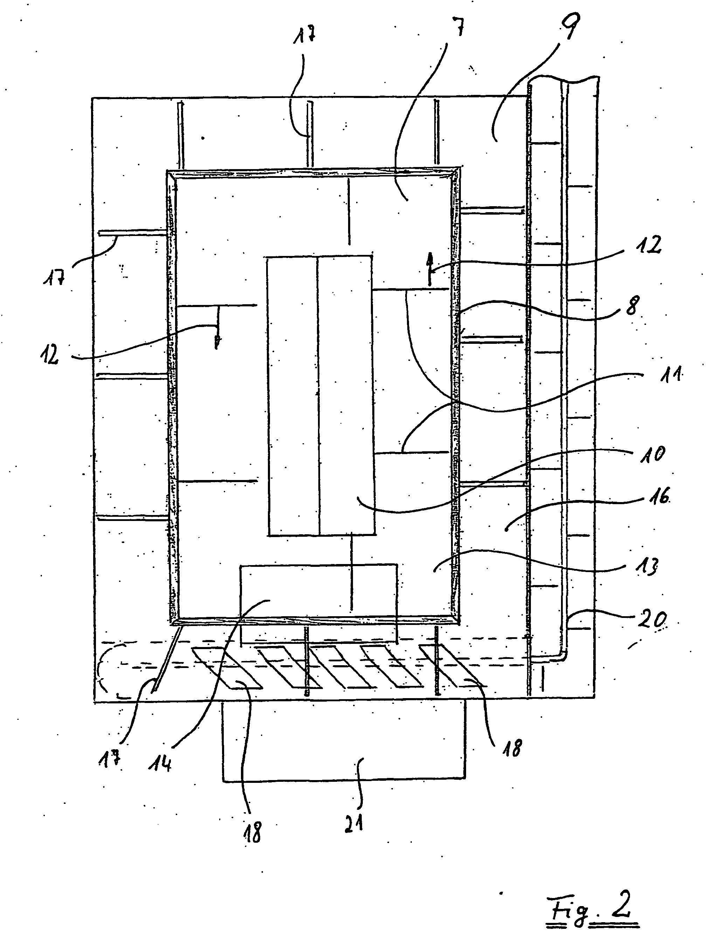

Innerhalb des Filterraumes 7 befindet sich ein satteldachähnlicher Teilkörper 10, der die von oben auftreffende Flüssigkeit zur Seite in Richtung der Filterwand 8 umlenkt. Um diesen Teilkörper 10 herum verläuft eine nicht dargestellte Kette, die eine Vielzahl von vertikal ausgerichteten Rakeln 11 entlang der Filterwand 8 zieht und diese von sich absetzendem Filterkuchenmaterial befreit. Die Rakel verlaufen dabei in der in der Figur 2 mit Pfeilen 12 dargestellten Richtung. Sie kratzen das Material von der Filterwand 8 ab und transportieren auf den Boden 13 des Filterraumes gefallenes Material zu einer Öffnung 14 im Boden, von wo es über eine Rutsche 15 aus dem Filterraum 7 abgeleitet wird.

Das durch die Filterwand 8 durchgetretene Kühlmittel kommt im Beruhigungsraum 9 zur Ruhe, wobei sich in ihm befindliche Schwebstoffe am Boden 16 des Beruhigungsraumes absetzen. Über diesen Boden werden über eine wiederum nicht dargestellte Kette eine Vielzahl von Abstreifern 17 geführt, wiederum entsprechend der Richtung der Pfeile 12 in Figur 2. Die Abstreifer laufen dabei an einer Seite des Beruhigungsraumes 9, der im hier dargestellten Beispiel den Filterraum 7 auf seinem gesamten Umfang umgibt, über im Boden 16 ausgebildete Öffnungen 18, die im hier dargestellten Beispiel als schräg angeordnete parallelogrammartige Schlitze gebildet sind.

Das von den Abstreifern 17 mitgenommene Material, das sich am Boden 16 der Beruhigungskammer abgesetzt hat, fällt durch diese Öffnungen 18 nach unten auf einen in der Figur 1 in der Seitenansicht zu erkennenden Horizontalförderer 19. Dieser Horizontalförderer ist wiederum als Kettenförderer ausgebildet und geht an seinem einen Ende in einen Schrägförderer 20 über, der neben der Auswurföffnung 6 des Langspanförderers 4 endet und dort das Material gleichfalls in den nicht dargestellten Auffangbehälter zum Recycling abgibt.

Die sich im Beruhigungsraum 9 ansammelnde Flüssigkeit, aus der alle Produktionsrückstände entfernt sind, wird an einem Überlauf 21 dann aus der Vorrichtung wieder abgeleitet und in der oben erwähnten Werkzeugmaschine wieder verwandt. Alternativ hierzu wäre es natürlich auch möglich, dieses gereinigte Öl nicht der Werkzeugmaschine wieder zuzuführen, sondern aus dem Beruhigungsraum 9 (beispielsweise durch Absaugen) zu entnehmen, um es an anderer Stelle zu lagern bzw. zu verwenden.

Im hier dargestellten Beispiel soll auch noch darauf hingewiesen werden, dass die Rutsche 15, mit der Material aus dem Filterraum 7 abgeleitet wird, oberhalb der Öffnungen 18 im Boden 16 des Beruhigungsraumes 9 endet. Damit fällt hier abgeleitetes Material direkt durch die Schlitze 18 auf den Horizontalförderer 19 und kann von diesem abtransportiert werden.

Man erkennt in der Figur 1 weiter, dass der Horizontalförderer 19 in einer separaten Kammer 22 unterhalb des Bodens 16 angeordnet ist. Durch diese separate Kammer 22 wird nur ein geringer Totraum unterhalb des Bodens 16 benötigt für die Unterbringung des Horizontalförderers.

Im übrigen erkennt man in der Figur 1 auch, dass die Vorrichtung aufgrund von Rädern 23 mobil ist, so dass sie für eine Wartung oder ähnliche Zwecke auch von dem Kanal 1 der nicht dargestellten Werkzeugmaschine weg gefahren werden kann.

Es sei auch noch erwähnt, dass es auch möglich ist, sowohl am Überlauf 21 als auch in einem separat zu montierenden, hier nicht dargestellten Überlauf für den Filterraum 7 eine Magnetwalze als Zusatzteil vorzusehen. Über diese können zusätzlich magnetische Metallreste aus den Flüssigkeiten entfernt werden.

Im übrigen sind die Ketten, mit denen die Kratzer 11 und die Abstreifer 17 geführt werden, sowohl durch einen gemeinsamen Antrieb als auch durch getrennte Antriebe antreibbar. Hier können spezielle Anforderungen je nach Bedarf berücksichtigt werden.

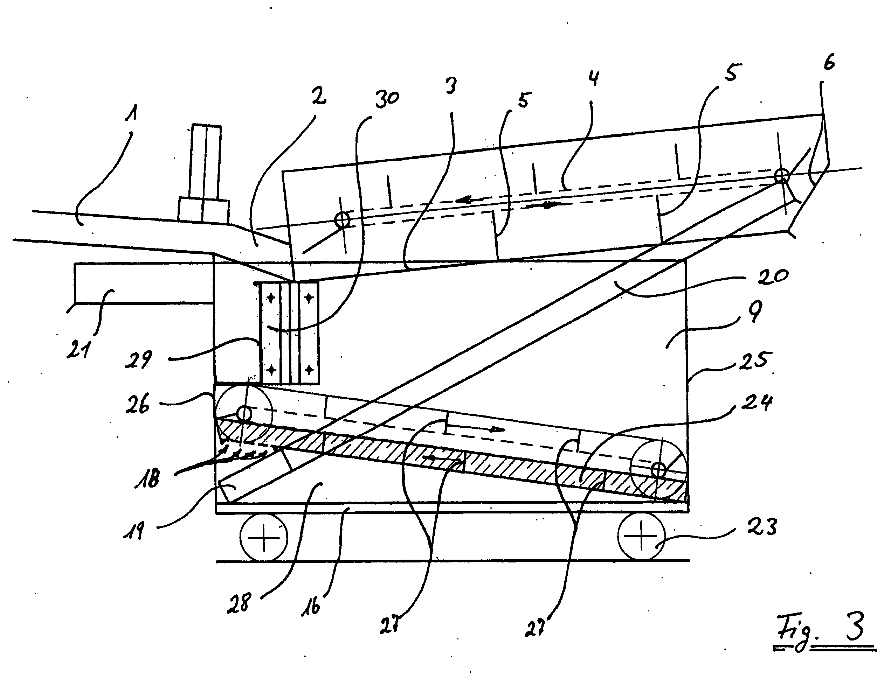

In der Figur 3 ist eine alternative Ausführungsform einer Vorrichtung zur Entfernung von Produktionsrückständen gemäß der Erfindung in der Seitenansicht dargestellt.

Auch hier wird von der nicht dargestellten Werkzeugmaschine in dieser verwandtes Kühlschmiermittel über einen Kanal 1 zugeführt und läuft über ein Mündungsstück 2 auf das Grobsieb 3, auf dem sich absetzende Grob- oder Langspäne von einem Langspanförderer 4, der entsprechend der Pfeile umläuft, zu einer Auswurföffnung 6 gekratzt, wo diese Späne zu einem Recycling einen hier nicht dargestellten Sammelbehälter fallen.

Durch das Grobsieb 3 hindurchtretendes Kühlschmiermittel läuft im hier dargestellten Ausführungsbeispiel direkt in einen Beruhigungsraum 9.

In diesen Beruhigungsraum 9 ist ein wannenartiger Boden 24 eingelegt. Dieser ist etwas länger als der Beruhigungsraum 9 selbst und dessen Boden 16 und liegt somit an den Stirnseiten 25 und 26 des Beruhigungsraumes 9 mit einer Neigung an. Über den somit geneigten Boden 24 werden Abstreifer 27 geführt. Die Abstreifer 27 erstrecken sich dabei über die gesamte Breite des wannenartigen Bodens 24 und werden parallel zu dem Boden 24 durch einen nicht näher beschriebenen Förderer in umlaufender Weise mitgenommen. Die Abstreifer 27 führen dabei sich auf dem wannenartigen Boden 24 absetzendes Material zu am oberen in der Zeichnung linken Ende des Bodens 24 vorgesehenen Öffnungen 18, die vorzugsweise wieder durch schräg angeordnete Schlitze gebildet werden. Durch diese Schlitze hindurch fällt das von den Abstreifern 27 mitgenommene Material wieder auf einen unter diesen Schlitzen angeordneten Horizontalförderer 19, von dem es wie oben bereits beschrieben wieder zu einem Schrägförderer 20 geleitet wird. Dieser transportiert dieses feine, sich absetzende Material wie oben ebenfalls bereits beschrieben zu einer Abwurfstelle neben der Auswurföffnung 6 des Langspanförderers 4 und wirft das Material gleichfalls in den nicht dargestellten Auffangbehälter zum Recycling ab.

In dem hier dargestellten Beispiel ist dabei der Horizontalförderer 19 nicht in einer separaten Kammer unterhalb des Bodens 16 des Beruhigungsraumes 9 angeordnet, sondern in einem Zwickelraum 28, der sich zwischen dem Boden 16 und dem geneigt darüber angeordneten wannenartigen Boden 24 ausbildet.

Es sei hier noch erwähnt, dass zwischen dem in der Figur 3 zu erkennenden Schrägförderer 20 und dem Beruhigungsraum 9 eine nicht näher zu erkennende Trennwand vorhanden ist, die im wesentlichen parallel zu der Zeichnungsebene verläuft und so eine deutliche Trennung vom Schrägförderer 20 vom Beruhigungsraum 9 darstellt.

In der Figur 3 ist im übrigen noch zu erkennen, dass das im Beruhigungsraum 9 zur Ruhe gekommene Öl noch über einen Ablauffilter 29 geführt wird, bevor es über den Überlauf 21 aus der Vorrichtung entnommen wird bzw. zurück zur Werkzeugmaschine gelangt. Der Ablauffilter 29 wird dabei über einen in der Figur 3 nur in der Seitenansicht zu erkennenden Kratzer 30 freigehalten. Durch den Kratzer 30 vom Ablauffilter 29 abgeschabtes Feinmaterial fällt im hier dargestellten Beispiel nach unten auf den wannenartigen Boden 24, wo es dann ebenfalls über die Abstreifer 27 aufgenommen und durch die Öffnungen 18 auf den Horizontalförderer 19 gegeben wird, von wo auch dieses Material dann über den Schrägförderer 20 einem Recycling zugeführt wird.

Die hier in der Figur 3 beschriebene Vorrichtung hat den wesentlichen Vorteil, dass sie ohne größere Probleme auch in einen bereits existierenden Beruhigungsraum 9 nachträglich eingebaut werden kann.

## Patentansprüche

1. Vorrichtung zum Entfernen von Produktionsrückständen aus einer Flüssigkeit mit einem Beruhigungsraum (9) für die Flüssigkeit,
**dadurch gekennzeichnet,**
**dass** über den Boden (16, 24) des Beruhigungsraumes (9) wenigstens ein Abstreifer (17, 27) läuft, und dass der Boden (16, 24) wenigstens eine vom Abstreifer (17, 27) überstrichene Öffnung (18) aufweist, durch die vom Abstreifer (17, 27) mitgeführte Produktionsrückstände nach unten abgeführt werden.

2. Vorrichtung nach Anspruch 1,
**dadurch gekennzeichnet,**
**dass** die Öffnung (18) durch schräg angeordnete Schlitze gebildet ist.

3. Vorrichtung gemäß Anspruch 1,
**dadurch gekennzeichnet,**
**dass** unter der Öffnung (18) ein Horizontalförderer (19) angeordnet ist, insbesonder ein Kettenförderer.

4. Vorrichtung gemäß Anspruch 3,
**dadurch gekennzeichnet,**
**dass** der Horizontalförderer (19) in einen Schrägförderer (20) übergeht.

5. Vorrichtung gemäß Anspruch 1,
**dadurch gekennzeichnet,**
**dass** dem Beruhigungsraum (9) ein Filterraum (7) vorgeschaltet ist, aus dem die Flüssigkeit durch eine vertikale Filterwand (8) in den Beruhigungsraum (9) eintritt.

6. Vorrichtung gemäß Anspruch 1,
**dadurch gekennzeichnet,**
**dass** der Boden (24) in den Beruhigungsraum (9) einlegbar ist.

## Claims

1. A device for removing production residue from a liquid having a calming space (9) for the liquid, **characterised in that** at least one stripper (17, 27) runs over the floor (16, 24) of the calming space (9), and **in that** the floor (16, 24) has at least one opening (18) swept by the stripper (17, 27), by which production residue carried along by the stripper (17, 27) are discharged downwards.

2. The device as claimed in Claim 1, **characterised in that** the opening (18) is formed by angular arranged slots.

3. The device as claimed in Claim 1, **characterised in that** a horizontal conveyor (19), in particular a chain conveyor, is arranged under the opening (18).

4. The device as claimed in Claim 3, **characterised in that** the horizontal conveyor (19) transitions into a slope conveyor (20).

5. The device as claimed in Claim 1, **characterised in that** a filtering space (7), from which the liquid enters the calming space (9) via a vertical filtering wall (8), is connected upstream of the calming space (9).

6. The device as claimed in Claim 1, **characterised in that** the floor (24) can be laid in the calming space (9).

## Revendications

1. Dispositif pour retirer les résidus de production d'un liquide avec une chambre de repos (9) pour le liquide,
**caractérisé en ce qu'**au moins un racleur (17, 27) circule sur le fond (16, 24) de la chambre de repos (9) ,et **en ce que** le fond (16, 24) présente au moins une ouverture (18) est traversée par le racleur (17, 27), par laquelle ouverture les résidus de production entraînés par le racleur (17, 27) sont éliminés vers le bas.

2. Dispositif selon la revendication 1,
**caractérisé en ce que**,
l'ouverture (18) est formée par des fentes disposées en biais;

3. Dispositif selon la revendication 1,
**caractérisé en ce qu'**un système de transport horizontal (19) est disposé sous l'ouverture (18), notamment un convoyeur à chaînes.

4. Dispositif selon la revendication 3,
**caractérisé en ce que**,
le système de transport horizontal (19) fusionne avec un convoyeur incliné.

5. Dispositif selon la revendication 1,
**caractérisé en ce qu'**une chambre de filtrage (7) est disposée en amont de la chambre de repos (9), hors de laquelle chambre de filtrage, le liquide pénètre par une paroi de filtrage (8) verticale dans la chambre de repos (9).

6. Dispositif selon la revendication 1,
**caractérisé en ce que**,
le fond (24) peut être disposé dans la chambre de repos (9).
